# EUROPÄISCHE PATENTANMELDUNG

(11) **EP 1 580 175 A1**
(43) Veröffentlichungstag der Anmeldung: **28.09.2005**
(21) Anmeldenummer: 04006924.7
(22) Anmeldetag: 23.03.2004
(51) Int. Cl.: C04B 28/02, C04B 22/14

(54) **Zuschlagsstoff für Beton**

(71) Anmelder: Kehrmann, Alexander, 46509 Xanten (DE)
(72) Erfinder: Kehrmann, Alexander, D-47053 Duisburg (DE)
(74) Vertreter: Ksoll, Peter

(57) **Zusammenfassung**

Die Erfindung betrifft einen Zuschlagsstoff für Beton sowie einen Beton mit einem solchen Zuschlagsstoff. Der Zuschlagsstoff besteht aus Calciumferrit, welches gebildet ist durch eine Mischung von Filtersalz aus der Titandioxidproduktion und basischer Konverterschlacke. Vorteilhafterweise sind Filtersalz und Konverterschlacke in einem Verhältnis von 1:1 gemischt.

## Beschreibung

Die Erfindung betrifft einen Zuschlagsstoff für Beton und einen Beton mit einem solchen Zuschlagsstoff.

Beton ist ein Verbundwerkstoff aus einer Mischung von Zement als hydraulischem Bindemittel, Wasser und groben Zuschlagsstoffen wie Sand, Kies, Schotter oder Splitt. Gegenbenenfalls werden auch Betonzusätze zur Beeinflussung der Eigenschaften des Betons, beispielsweise der Fließfäihigkeit oder als Verzögerer bzw. Erhärtungsbeschleuniger zugegeben.

Die grundsätzlichen Eigenschaften von Beton lassen sich durch das Mischungsverhältnis, durch die Auswahl der Ausgangsstoffe sowie durch die Verdichtung und Nachbehandlung in weiten Grenzen verändern. Die Zusammensetzung des Betons ist hierbei von ausschlaggebender Bedeutung und wird durch das Verhältnis der Ausgangsstoffe Zement, Zuschlag und Wasser festgelegt.

Der Erfindung liegt die Aufgabe zugrunde, einen Zuschlagsstoff für Beton aufzuzeigen, welcher kostengünstig ist und eine positive Beeinflussung der Eigenschaften eines Betons ermöglicht.

Die Lösung dieser Aufgabe besteht in einem Zuschlagsstoff gemäß Patentanspruch 1. Bei dem Zuschlagstoff handelt es sich um ein Calciumferrit (CaFe₂O₄), welches aus einer Mischung aus Filtersalz aus der Titandioxidproduktion und Konverterschlacke gebildet ist.

Vorteilhafte Ausgestaltungen des erfindungsgemäßen Zuschlagsstoffs sind Gegenstand der abhängigen Ansprüche 2 bis 5.

Der erfindungsgemäße Zuschlagsstoff ist gebildet aus industriellen Abprodukten andererindustrieller Prozesse, nämlich der Titandioxidherstellung einerseits und der Stahlerzeugung andererseits. Filtersalz aus der Titandioxidproduktion besteht zu einem überwiegenden Teil aus Eisen-(II)-Sulfat. Dieses Eisen-(II)-Sulfat reagiert mit den in einem Zement enthaltenen Chrom-(VI)-Verbindungen und führt zu einer chemischen Reduktion des Chromat-(VI). Das Eisen-(II)-Sulfat reduziert das lösliche Chrom-(VI) unlösliches Chrom-(III). Hierdurch können gesundheitliche Beeinträchtigungen bei der Verarbeitung des Betons durch das lösliche Chromat, insbesondere allergische Zementekzeme vermieden werden. Das Filtersalz aus die Titandioxidproduktion enthält noch einen vergleichsweise hohen Anteil an Schwefelsäure. Diese Säure wird zumindest teilweise gebunden durch die Konverterschlacke, insbesondere durch die in der Konverterschlacke enthaltenen Kalkanteile. Das Filtersalz und die Konverterschlacke reagieren zu Calciumferrit. Vorzugsweise kommt Konverterschlacke aus sogenannten LD-Konvertern (Linz-Donawitz) zum Einsatz, bei dem Sauerstoff von oben mit hohem Überdruck durch eine Sauerstofflanze auf ein phophatarmes flüssiges Stahlbad geblasen wird.

In synergetischer Weise wird die Kombination von Filtersalz und Konverterschlacke genutzt. Das Filtersalz bzw. das darin enthaltene Eisen-(II)-Sulfat reduziert das schädliche Chromat im Zement des Betons. Die Konverterschlacke mit ihren basischen Komponenten bindet den Säuregehalt des Filtersalzes und schafft gleichzeitig das Stützgerüst des Betons.

Eine aufwendige Aufbereitung der zur Herstellung des erfindungsgemäßen Zuschlagsstoffs eingesetzten beiden Komponenten ist grundsätzlich nicht erforderlich. Gegebenenfalls kann die Konverterschlacke gesiebt werden.

Für die Praxis sollte die Konverterschlacke eine Körnung von 0,01 mm bis 80 mm besitzen. Als besonders vorteilhaft wird eine Körnung der Konverterschlacke von 0,1 mm bis 10 mm angesehen.

In ersten praktischen Versuchen wurden sehr gute Ergebnisse erzielt mit einem Zuschlagsstoff, bei dem Filtersalz und Konverterschlacke in einem Verhältnis von 1:1 1 gemischt sind. Möglich sind aber auch andere Mischungsverhältnisse je nach Konsistenz bzw. Feuchtigkeitsgehalt und chemischer Zusammensetzung der beiden Komponente Filtersalz und Konverterschlacke.

Bevorzugt kommt eine basische Konverterschlacke, insbesondere eine eisenoxydulreiche Kalkschlacke, zur Anwendung. Das CaO:SiO₂-Verhältnis der Konverterschlacke ist größer als 1. Besonders gut geeignet ist eine Konverterschlacke, die freie Anteile von Kalk enhält, da diese Anteile wirksam mit der Säure im Filtersalz reagieren.

Kostenmäßig günstig wirkt sich aus, dass der erfindungsgemäße Zuschlagsstoff aus Abprodukten anderer industrieller Prozesse hergestellt ist. Diese Abprodukte müssten ansonsten einer separaten Aufbereitung, Weiterbehandlung oder Deponierung zugeführt werden. Durch die erfindungsgemäß vorgesehene Nutzung der Abprodukte kann mithin auch ein Beitragzum Umweltschutz geleistet werden.

Patentanspruch 6 ist auf einen Beton mit einem erfindungsgemäßen Zuschlagsstoff gerichtet, da dieser gute physikalische und chemische Eigenschaften aufgrund der Zugabe des erfindungsgemäßen Zuschlagsstoffs aufweist. Insbesondere hinsichtlich der Druckfestigkeit und der Rohdichte sowie gegebenenfalls auch der Wärmeleitfähigkeit lässt der Beton gute Werte erwarten. Diese gehen zurück auf den eingesetzten Zuschlagsstoff und sind maßgeblich bestimmt durch das Korngerüst der Konverterschlacke.

## Patentansprüche

1. Zuschlagstoff für Beton, gebildet aus einer Mischung von Filtersalz aus der Titandioxidproduktion und Konverterschlacke.

2. Zuschlagstoff für Beton nach Patentanspruch 1, wobei Filtersalz und Konverterschlacke in einem Verhältnis von 1 : 1 gemischt sind.

3. Zuschlagstoff für Beton nach Patentanspruch 1 oder 2, wobei Konverterschlacke mit einer Körnung von 0,01 mm bis 80 mm, vorzugsweise von 0,1 mm bis 10 mm, zugegeben ist.

4. Zuschlagsstoff für Beton nach einem der Patentansprüche 1 bis 3, wobei die Konverterschlacke basisch ist.

5. Zuschlagsstoff für Beton nach einem der Patentansprüche 1 bis 4, wobei die Konverterschlacke Anteile von freiem Kalk aufweist.

6. Beton mit einem Zuschlagstoff gemäß einem der Ansprüche 1 bis 5.
